# EUROPÄISCHE PATENTSCHRIFT

(11) **EP 0 723 143 B1**
(45) Veröffentlichungstag und Bekanntmachung des Hinweises auf die Patenterteilung: **13.05.1998**
(21) Anmeldenummer: 95100337.5
(22) Anmeldetag: 12.01.1995
(51) Int. Cl.: G01L 19/14, G01L 9/12

(54) **Keramischer Drucksensor mit Behälteranschlusselement und Doppeldichtung**
Ceramic pressure sensor with container connection element and double seal
Capteur de pression céramique avec une pièce de connection pour un récipient et une garniture double

(43) Veröffentlichungstag der Anmeldung: 24.07.1996
(73) Patentinhaber: ENDRESS + HAUSER GMBH + CO., D-79689 Maulburg (DE)
(72) Erfinder: Martin, Rainer, D-79588 Efringen-Kirchen (DE)
(74) Vertreter: Morstadt, Volker, Dipl.-Ing.

(56) Entgegenhaltungen:
- WO-A-93/22646
- DE-A- 3 344 799

## Beschreibung

Die Erfindung betrifft eine Vorrichtung zur Messung von Druck oder Differenzdruck mit einem keramischen Drucksensor.

In der DE-A 42 34 290 ist eine Vorrichtung zur Druckmessung beschrieben
- mit einem rotationssymmetrischen keramischen Drucksensor,
- mit einem rotationssymmetrischen, eine axiale Bohrung aufweisenden Gehäuse,
   -- deren Durchmesser in Richtung der dem Meßmedium zugewandten Frontseite abnimmt, und
- mit einem einzigen, zwischen Gehäuse und der Mantelfläche des Drucksensor frontbündig eingesetzten Dichtelement.

Das dartige Dichtelement, das ständig mit dem Meßmedium in Berührung steht, kann nicht ausgewechselt werden, ohne daß der Drucksensor aus dem Gehäuse entnommen werden muß. Nach dem Auswechseln des Dichtelements ist eine erneute Kalibrierung der Vorrichtung erforderlich.

Dieses Auswechseln ist aber nicht nur im Ersatzfall, sondern auch bei der Reinigung nötig, insb. dann, wenn die Vorrichtung in der Lebensmittelindustrie verwendet wird. Denn dort bilden in der vorbeschriebenen Art eingebaute Dichtelemente potentielle Bakteriennester.

In der DE-A 42 13 857 ist ferner eine Vorrichtung zur Messung von Druck oder Differenzdruck beschrieben mit
- einem keramischen Drucksensor,
- einem Gehäuse,
- einem lösbar mit dem Gehäuse verbundenen Anschlußelement zur Befestigung der Vorrichtung an einer Wand eines ein Meßmedium enthaltenden Behälters,
   -- wobei das Anschlußelement eine enge, axiale Innenbohrung aufweist, die die Funktion eines Druckmittlers besitzt und durch die der Drucksensor mit dem Meßmedium in Berührung steht und mit
- einem zwischen Gehäuse, Anschlußelement und Drucksensor auf der dem Meßmedium zugewandten Seite eingefügten, auswechselbaren Dichtelement, das mit definierter Kraft eingespannt ist, indem das Anschlußelement gegen einen Anschlag geschraubt ist.

Eine Vorrichtung dieser Art eignet sich jedoch nicht für hochviskose und/oder klebrige Medien, da solche Medien die axiale Innenbohrung des Anschlußelementes blockieren und damit die Druckübertragung beeinträchtigen.

Es ist eine Aufgabe der Erfindung, eine Vorrichtung zur Druck- oder zur Differenzdruck-Messung anzugeben, die insb. für hochviskose und/oder klebrige Lebensmittel geeignet und leicht zu reinigen ist, ohne daß die elektrischen Eigenschaften beinträchtigt werden.

Hierzu besteht die Erfindung in einer Vorrichtung zur Messung von Druck oder Differenzdruck mit
- einem keramischen Drucksensor,
- einem Gehäuse,
- einem lösbar mit dem Gehäuse verbundenen Anschlußelement zur Befestigung der Vorrichtung an einer Wand eines ein Meßmedium enthaltenden Behälters,
- einem zwischen Gehäuse und Drucksensor auf der dem Meßmedium zugewandten Seite eingefügten äußeren Dichtelement und
- einem zwischen Drucksensor und Anschlußelement angeordneten, auswechselbaren inneren Dichtelement,
   -- welche Dichtelemente sich koaxial umgreifen.

Gemäß einer vorteilhaften Ausgestaltung der Erfindung weist der Drucksensor eine druckempfindliche Membran auf und das Gehäuse und das Anschlußelement sind jeweils mit einer zentralen Öffnung versehen, durch die hindurch die Druckmembran mit dem Meßmedium in Berührung steht.

Nach einer vorteilhaften Weiterbildung der Erfindung schließt das Gehäuse auf seiner dem Meßmedium zugewandten Seite mit einem in das Gehäuse-Innere ragenden Halterungsring ab, der eine Nut zur Aufnahme des äußeren Dichtelements aufweist und wobei der Drucksensor gegen das äußere Dichtelement gepreßt ist.

Nach einer weiteren vorteilhaften Ausgestaltung umgreift das Anschlußelement das Gehäuse auf der dem Meßmedium zugewandten Seite und preßt das innere Dichtelement gegen einen druck-unempfindlichen Rand des Drucksensors, wobei das innere Dichtelement auf der dem Meßmedium zugewandten Seite am Anschlußelement, auf der vom Meßmedium abgewandten Seite am Drucksensor und auf der Außenseite am Gehäuse anliegt sowie auf der Innenseite vom Meßmedium berührt ist.

Eine weitere vorteilhafte Ausgestaltung der Erfindung besteht darin, daß das das Meßmedium das Gehäuse nicht berührt.

Nach einer weiteren vorteilhaften Ausgestaltung der Erfindung ist das Gehäuse über das äußere Dichtelement druckdicht mit dem Anschlußelement verbunden, und das Gehäuse und das Anschlußelement sind miteinander verschraubt.

Weiterhin kann das Anschlußelement druckdicht mit der Wand des Behälters lösbar verbunden sein und aus einem gegenüber dem Meßmedium beständigen Material, vorzugsweise aus Hastelloy, Titan, Tantal, Monel, Nickel oder Inconel, bestehen.

Ein Vorteil der Erfindung besteht darin, daß die Vorrichtung eine weitgehend ebene Frontfläche und keinerlei Engpässe aufweist, durch die das Meßmedium geleitet wird.

Ein weiterer Vorteil der Erfindung besteht darin, daß die Vorrichtung das Auswechseln des mit dem Meßmedium in Berührung stehenden Dichtelements erlaubt, ohne daß eine erneute Kalibrierung der Vorrichtung notwendig ist und ohne daß Bauteile erforderlich sind, die ihrer Funktion nach Druckmittler sind.

Ein weiterer Vorteil der Erfindung ist, daß die Vorrichtung durch das lösbar verbundene Anschlußelement als Universalbaustein für eine Vielzahl von Prozeßanschlüssen einsetzbar ist und daß aufwendige Lagerhaltung mit vielen Austauschteilen die auf Grund von Hygienebestimmungen und/oder-wegen starken Verunreinigungen erforderlich sind, vermeidbar ist.

Die Erfindung und weitere Vorteile werden nun anhand der Zeichnungen, in denen ein Ausführungsbeispiel dargestellt ist näher erläutert.
- Fig. 1 zeigt:: einen Längsschnitt durch eine erfindungsgemäße Vorrichtung und
- Fig. 2 zeigt:: einen Längsschnitt durch das in Fig. 1 dargestellte Gehäuse.

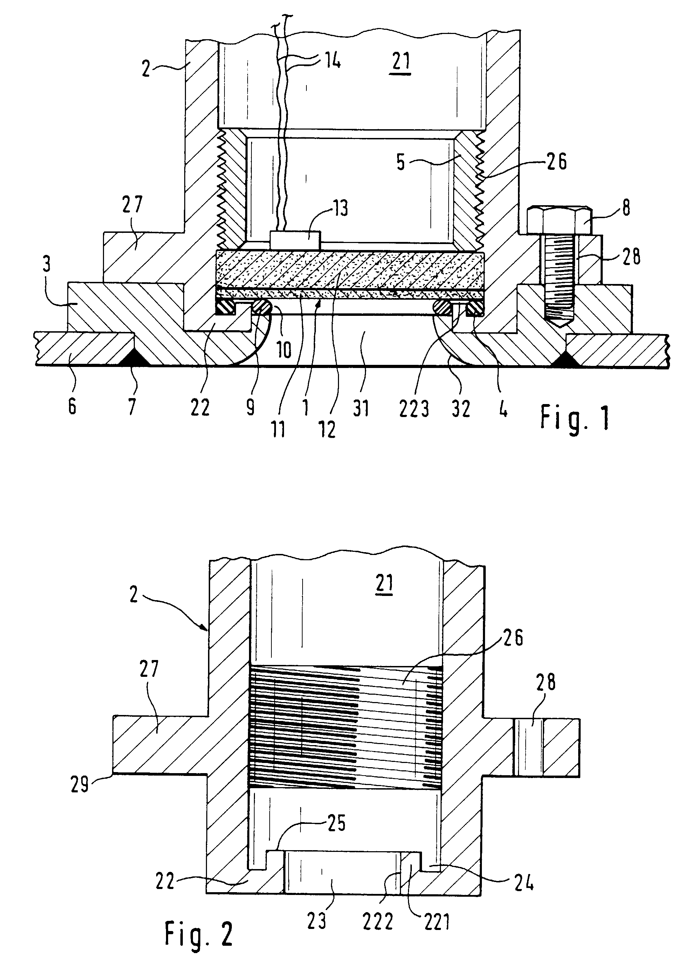

In Fig. 1 besteht die Vorrichtung zur Messung von Druck oder Differenzdruck aus drei Hauptelementen: einem Drucksensor 1, einem Gehäuse 2 und einem lösbar mit dem Gehäuse verbundenen Anschlußelement 3. Letzteres dient der Befestigung der Vorrichtung an einer Wand 6 eines ein Meßmedium enthaltenden Behälters. Zwischen dem Gehäuse 2 und dem Drucksensor 1 befindet sich auf der meßmedium-zugewandten Seite ein äußeres Dichtelement 4. Zwischen dem Drucksensor 1 und dem Anschlußelement 3 ist ein auswechselbares inneres Dichtelement 9 angeordnet. Die beiden Dichtelemente 4, 9 umgreifen sich koaxial.

Der Drucksensor 1 ist beispielsweise übliche kapazitive, zylindrische Druckmeßzelle, die aus einer Membran 11 und einem Grundkörper 12 besteht, die durch ein Verbindungsmaterial, z.B. ein Aktivhartlot, in einem definierten Abstand von einander gehalten und mit einander hermetisch dicht verbunden sind. Die mit Elektrodenmaterial beschichteten Innenflächen der Membran 11 und des Grundkörper 12 bilden mindestens einen Meßkondensator, dessen Kapazität von der Durchbiegung der Membran 11 abhängt und somit ein Maß für den an der Membran 11 anliegenden Druck ist.

Die Membran 11 kann aus Keramik, Oxidkeramik, Quarz, Saphir oder einem kristallinen Werkstoff bestehen. Der Grundkörper 12 besteht vorzugsweise aus einem Material, das dem Werkstoff der Membran 11 sehr ähnlich ist, oder zumindest einen vergleichbaren thermischen Ausdehnungskoeffizienten aufweist.

Auf der meßmedium-abgewandten Seite weist die Druckmeßzelle eine elektronische Schaltung 13 auf, die die Kapazität des Meßkondensators in ein druckabhängiges elektrisches Signal umwandelt und über elektrische Anschlußleitungen 14 einer weiteren Verarbeitung und/oder Anzeige zugänglich macht.

Aber auch andere Arten von Drucksensoren, z.B. Drucksensoren, die mit Dehnungsmeßstreifen arbeiten, sind bei der Erfindung einsetzbar.

Der Drucksensor 1 ist in das rotationssymmetrisches Gehäuse 2 so eingebracht, daß die druckempfindliche Membran 11 dem Meßmedium zugewandt ist. Die elektrischen Anschlußleitungen 14 verlaufen im Gehäuse-Inneren auf der meßmediumabgewandten Rückseite des Drucksensors 1.

Figur 2 zeigt das Gehäuse 2 als Einzelteil. Der Innendurchmesser eines zylindrischen Innenraumes 21 des Gehäuses 2 ist konstant und entspricht dem Außendurchmesser des Drucksensors 1.Das Gehäuse 2 und das Anschlußelement 3 weisen jeweils eine zentrale Öffnung 23, 31 auf, durch die hindurch die Membran 11 mit dem Meßmedium in Berührung steht. Die zentrale Öffnung 31 des Anschlußelementes 3 ist so konstruiert, daß nahezu die gesamte Membran 11 des Drucksensors 1 mit dem Meßmedium in Verbindung steht. Dadurch ist eine gute Ausnutzung der Empfindlichkeit des Drucksensors 1 gewährleistet und die Vorrichtung ist leicht zu reinigen.

Die Querschnittsfläche der Öffnung 31 nimmt in Richtung der dem Meßmedium zugewandten Seite dadurch zu, daß der Rand der Öffnung 31 im Längsschnitt einen Viertelkreis 32 beschreibt, vgl. Fig. 1. Die dem Meßmedium zugewandte Fläche des Anschlußelements 3 fluchtet mit der Behälterwand 6. Das Anschlußelement 3 erstreckt sich nur soweit vor den Randbereich des Drucksensor 1, wie dies zur Befestigung des inneren Dichtelementes 9 nötig ist. Wegen dieser mit dem Drucksensor 1 praktisch frontbündigen Ausbildung des Anschlußelements 3 ist die Vorrichtung gut zu reinigen.

Auf der dem Meßmedium zugewandten Seite ist das Gehäuse 2 als sich radial in den Innenraum 21 des Gehäuses 2 erstreckender Halterungsring 22 mit einem ringzylindrischen Bund 221 ausgebildet. Der Durchmesser der zentralen, kreisförmigen Öffnung 23 des Gehäuses 2 ist gleich dem Innendurchmesser des ringzylindrischen Bundes 221 des Halterungsringes 22.

Der Halterungsring 22 weist im Innenraum 21 des Gehäuses 2 auf der drucksensor-zugewandten Seite eine Nut 24 mit z.B. rechteckigem Querschnitt auf, deren Außendurchmesser dem Durchmesser des Innenraumes 21 entspricht. In dieser Nut 24 liegt das äußere Dichtelement 4. Dieses ist z.B. ein O-Ring aus einem Elastomer und hat die Funktion, die auf der Rückseite des Drucksensors 1 angeordnete elektronische Schaltung 13 vor Verunreinigungen und/oder Feuchtigkeit zu schützen.

Die Membran 11 liegt mit ihrem äußeren Rand auf der in der Nut 24 liegenden Gehäusedichtung 4 auf. Zwischen der Membran 11 und einer Schulter 25 des Bundes 221 besteht ein schmaler Spalt 223. Auf der meßmedium-abgewandten Seite wird der Drucksensor 1 von einem Gewindering 5 mit Außengewinde, der in ein Innengewinde 26 des Innennraums 21 des Gehäuses 2 eingeschraubt ist, gegen den Halterungsring 22 und das äußere Dichtelement 4 gepreßt, so daß dort der Drucksensor 1 druckdicht aufliegt. Das äußere Dichtlement 4 ist nicht auswechselbar.

Diese Anordnung hat den Vorteil, daß die Drucksensorkennlinie über weite Temperaturbereiche konstant ist, da der Drucksensors 1 definiert eingespannt ist. In dieser Form, die aus Drucksensor 1, Gehäuse 2, äußerem Dichtelement 4, Gewindering 5, elektronischer Schaltung 13 und den elektrischen Anschlußleitungen 14 besteht, liegt bereits eine ansich voll funktionsfähige Druckmessvorrichtung vor.

Zur Fixierung des inneren Dichtelementes 9 umgreift das Anschlußelement 3 den Bund 221 des Halterungsringes 22 derart, daß im Randbereich des Drucksensors 1 ein Spalt 10 zwischen Druckmembran 11 und Anschlußelement 3 besteht. Auf der meßmedium-zugewandten Seite liegt das Dichtelement 9 am Anschlußelement 3, auf der meßmedium-abgewandten Seite am Drucksensor 1 und auf der Außenseite am Gehäuse 2 an. Auf der Innenseite ist es vom Meßmedium berührt. Das Dichtelement 9 besteht aus einem gegen das Meßmedium beständigen Material. Je nach Medium ist dies z. B. ein Viton-O-Ring, eine Kalrez-Dichtung oder eine polytetrafluorethylenummantelte Viton-Dichtung. Das Gehäuse 2 steht nicht in Berührung mit dem Meßmedium. An der Außenseite und an der dem Meßmedium zugewandten Frontseite des Gehäuses 2 umschließt das Anschlußelement 3 den Halterungsring 22 vollständig.

Zur druckdichten, lösbaren Befestigung des Anschlußelementes 3 am Gehäuse 2 weist dieses in Höhe der vom Meßmedium abgewandten Fläche des Drucksensors 1 einen Absatzring 27 mit mindestens zwei Bohrungen 28 auf, durch die das Gehäuse 2 mit dem Anschlußelement 3 mittels Schrauben 8 verbunden ist. Somit liegt das Gehäuse 2 mit dem Absatzring 27 dicht auf dem Anschlußelement 3 und dieses am unteren Gehäuserand dicht auf dem Halterungsring 22 an der der Nut 24 gegenüberliegenden Seite auf. Dadurch ist gewährleistet, daß der Spalt 10, in dem sich das innere Dichtelement 9 befindet, immer die gleichen Abmessungen hat und das innere Dichtelement 9 bei jedem Einbau die gleiche Andruckkraft erfährt.

Außer der druckempfindlichen Membran 11 des Drucksensors 1 sind das Anschlußelement 3 und das innere Dichtelement 9 die einzigen Bestandteile der Vorrichtung, die mit dem Meßmedium in Berührung kommen. Nur diese beiden Teile müssen daher gegen das Meßmedium beständig sein. Bei besonders aggressiven Meßmedien ist der Werkstoff des Anschlußelementes 3 ein kostenintensiver Spezialwerkstoff, wie z.B. Titan, Tantal, Nickel, Monel, Inconell oder Hastelloy. Der Werkstoff des Gehäuses 2 kann dagegen ein im Vergleich hierzu kostengünstiger Standardwerkstoff, wie z.B. Aluminium oder Stahl, sein.

Das Anschlußelement 3 ist mittels eines Prozeßanschlußes 7 an der Behälterwand 6 befestigt. In Fig. 1 ist der Prozeßanschluß 7 nur schematisch gezeigt. Während die Innengeometrie des Anschlußelements 3 für alle Anwendungen identisch ist, gibt es für die Außengeometrie des Anschlußelements 3 viele Varianten, so zum Beispiel die Ausbildung als Flansch, der am Meßort mit einem Gegenflansch verschraubt wird, die Ausbildung als Außengewinde, das in eine entsprechende Öffnung eingeschraubt wird oder die Ausbildung als Drehteil, das in eine Behälteröffnung 6 eingeschweißt wird. Weitere lösbare oder nicht-lösbare Prozeßanschlüsse 7 sind dem Fachmann bekannt.

Das Anschlußelement 3 erfüllt damit zwei Aufgaben. Zum einen gewährleistet es eine reproduzierbare, d.h. eine die Drucksensorkennlinie nicht verändernde, Einspannung des Dichtelementes 9, zum anderen ist es seiner Funktion nach ein Adapter, durch den die eigentliche Drucksensor-Anordnung, d.h. der Drucksensor 1, das Gehäuse 2, das äußere Dichtelement 4, der Gewindering 5, die elektronische Schaltung 13 und die elektrischen Anschlußleitungen 14, als Universalbaustein an einen von vielen möglichen Prozeßanschlüssen an der Behälterwand 6 befestigt ist.

## Patentansprüche

1. Vorrichtung zur Messung von Druck oder Differenzdruck mit
- einem keramischen Drucksensor (1),
- einem Gehäuse (2),
- einem lösbar mit dem Gehäuse (2) verbundenen Anschlußelement (3) zur Befestigung der Vorrichtung an einer Wand (6) eines ein Meßmedium enthaltenden Behälters,
- einem zwischen Gehäuse (2) und Drucksensor (1) auf der dem Meßmedium zugewandten Seite eingefügten äußeren Dichtelement (4) und
- einem zwischen Drucksensor (1)und Anschlußelement (3) angeordneten, auswechselbaren inneren Dichtelement (9),
-- welche Dichtelemente sich koaxial umgreifen.

2. Vorrichtung nach Anspruch 1 mit einem eine druckempfindliche Membran (11) aufweisenden Drucksensor, wobei das Gehäuse (2) und das Anschlußelement (3) jeweils mit einer zentralen Öffnung (23, 31) versehen sind, durch die hindurch die Druckmembran (11) mit dem Meßmedium in Berührung steht.

3. Vorrichtung nach Anspruch 1, bei der
- das Gehäuse (2) auf seiner dem Meßmedium zugewandten Seite mit einem in das Gehäuse-Innere ragenden Halterungsring (22) abschließt,
- der Halterungsring (22) eine Nut (24) zur Aufnahme des äußeren Dichtelements (4) aufweist und
- der Drucksensor (1) gegen das äußere Dichtelement (4) gepreßt ist.

4. Vorrichtung nach Anspruch 1, bei der das Anschlußelement (3)
- das Gehäuse (2) auf der dem Meßmedium zugewandten Seite umgreift und
- das innere Dichtelement (9) gegen einen druck-unempfindlichen Rand des Drucksensors preßt,
-- wobei das innere Dichtelement (9)
--- auf der dem Meßmedium zugewandten Seite am Anschlußelement (3),
--- auf der vom Meßmedium abgewandten Seite am Drucksensor und
--- auf der Außenseite am Gehäuse (2) anliegt sowie
--- auf der Innenseite vom Meßmedium berührt ist.

5. Vorrichtung nach Anspruch 1, bei der das Meßmedium das Gehäuse (2) nicht berührt.

6. Vorrichtung nach Anspruch 1, bei der das Gehäuse (2) über das äußere Dichtelement (9) druckdicht mit dem Anschlußelement (3) verbunden ist.

7. Vorrichtung nach Anspruch 1, bei der Gehäuse (2) und Anschlußelement (3) miteinander verschraubt sind.

8. Vorrichtung nach Anspruch 1, bei der das Anschlußelement (3) druckdicht mit der Wand (6) des Behälters lösbar verbunden ist.

9. Vorrichtung nach Anspruch 1, bei der das Anschlußelement (3) aus einem gegenüber dem Meßmedium beständigen Material besteht.

10. Vorrichtung nach Anspruch 5, bei der das Anschlußelement (3) aus Hastelloy, Titan, Tantal, Monel, Nickel oder Inconel besteht.

## Claims

1. A device for measuring pressure or differential pressure, having
- a ceramic pressure sensor (1),
- a housing (2),
- a connection element (3) which is connected releasably to the housing (2) and is intended for fastening the device on a wall (6) of a container which contains a measuring medium,
- an outer sealing element (4) which is inserted between the housing (2) and pressure sensor (1), on the side facing the measuring medium, and
- an exchangeable inner sealing element (9) which is arranged between the pressure sensor (1) and connection element (3),
-- which sealing elements engage around one another coaxially.

2. The device as claimed in claim 1, having a pressure sensor which exhibits a pressure-sensitive diaphragm (11), the housing (2) and the connection element (3) each being provided with a central opening (23, 31) through which the pressure diaphragm (11) is in contact with the measuring medium.

3. The device as claimed in claim 1, in the case of which
- on its side facing the measuring medium, the housing (2) terminates with a securing ring (22) which projects into the housing interior,
- the securing ring (22) exhibits a groove (24) for receiving the outer sealing element (4), and
- the pressure sensor (1) is pressed against the outer sealing element (4).

4. The device as claimed in claim 1, in the case of which the connecting element (3)
- engages around the housing (2) on the side facing the measuring medium, and
- presses the inner sealing element (9) against a pressure-insensitive border of the pressure sensor,
-- the inner sealing element (9)
--- resting against the connection element (3) on the side facing the measuring medium,
--- resting against the pressure sensor on the side remote from the measuring medium, and
--- resting against the housing (2) on the outer side, and
--- being in contact with the measuring medium on the inner side.

5. The device as claimed in claim 1, in the case of which the measuring medium is not in contact with the housing (2).

6. The device as claimed in claim 1, in the case of which the housing (2) is connected to the connection element (3) in a pressure-tight manner via the outer sealing element (9).

7. The device as claimed in claim 1, in the case of which the housing (2) and connection element (3) are screwed to one another.

8. The device as claimed in claim 1, in the case of which the connection element (3) is connected releasably to the wall (6) of the container in a pressure-tight manner.

9. The device as claimed in claim 1, in the case of which the connection element (3) consists of a material which is resistant to the measuring medium.

10. The device as claimed in claim 5, in the case of which the connection element (3) consists of Hastelloy, titanium, tantalum, Monel, nickel or Inconel.

## Revendications

1. Dispositif pour mesurer la pression ou la différence de pression, comprenant :
- un capteur de pression (1) céramique,
- un boîtier (2)
- un élément (3) de raccordement relié de façon amovible au boîtier (2) pour fixer le dispositif sur une paroi (6) d'un récipient contenant un milieu à mesurer,
- un élément extérieur (4) d'étanchéité inseré entre le boîtier (2) et le capteur de pression (1) sur le côté tourné vers le milieu à mesurer, et
- un élément intérieur (9) d'étanchéité, démontable, disposé entre le capteur de pression (1) et l'élément (3) de raccordement,
-- lesquels éléments d'étanchéité s'étendent de façon coaxiale.

2. Dispositif selon la revendication 1, comprenant un capteur de pression doté d'une membrane (11) sensible à la pression, où le boîtier (2) et l'élément (3) de raccordement sont dotés chacun d'une ouverture centrale (23, 31) à travers laquelle la membrane (11) sensible à la pression est en contact avec le milieu à mesurer.

3. Dispositif selon la revendication 1, dans lequel
- le boîtier (2), sur son côté tourné vers le milieu à mesurer, est obturé par une bague de fixation (22) pénétrant à l'intérieur du boîtier,
- la bague de fixation (22) comporte une gorge (24) pour recevoir l'élément extérieur (4) d'étanchéité, et
- le capteur de pression (1) est en appui contre l'élément extérieur (4) d'étanchéité.

4. Dispositif selon la revendication 1, dans lequel l'élément (3) de raccordement
- entoure le boîtier (2) sur le côté tourné vers le milieu à mesurer, et
- applique l'élément intérieur (9) d'étanchéité contre un bord non sensible à la pression du capteur de pression,
-- où l'élément intérieur (9) d'étanchéité
--- est contigu à l'élément (3) de raccordement, sur le côté tourné vers le milieu à mesurer,
--- est contigu au capteur de pression, sur le côté opposé au milieu à mesurer, et
--- est contigu au boîtier (2), sur le côté extérieur,
--- de même qu'il est en contact avec le milieu à mesurer, sur le côté intérieur.

5. Dispositif selon la revendication 1, dans lequel le milieu à mesurer n'est pas en contact avec le boîtier (2).

6. Dispositif selon la revendication 1, dans lequel le boîtier (2) est relié à l'élément (3) de raccordement en étant étanche à la pression, via l'élément extérieur (4) d'étanchéité.

7. Dispositif selon la revendication 1, dans lequel le boîtier (2) et l'élément (3) de raccordement sont vissés ensemble.

8. Dispositif selon la revendication 1, dans lequel l'élément (3) de raccordement est relié de façon amovible à la paroi (6) du récipient en étant étanche à la pression.

9. Dispositif selon la revendication 1, dans lequel l'élément (3) de raccordement est constitué d'un matériau résistant au milieu à mesurer.

10. Dispositif selon la revendication 5, dans lequel l'élément (3) de raccordement est en alliage type *Hastelloy*, en titane, en tantale, en Monel, en nickel ou en Inconel.
